(19) Europäisches Patentamt
European Patent Office
Office européen des brevets

(11) **EP 1 201 004 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **00951195.7**

(22) Anmeldetag: **30.05.2000**

(51) Int Cl.$^7$: **H01M 10/36**

(86) Internationale Anmeldenummer:
**PCT/DE2000/001801**

(87) Internationale Veröffentlichungsnummer:
**WO 2000/079631 (28.12.2000 Gazette 2000/52)**

(54) **WIEDERAUFLADBARE ELEKTROCHEMISCHE ZELLE**

RECHARGEABLE ELECTROCHEMICAL CELL

CELLULE ELECTROCHIMIQUE RECHARGEABLE

(84) Benannte Vertragsstaaten:
**AT BE CH CY DE DK ES FI FR GB GR IE IT LI LU MC NL PT SE**

(30) Priorität: **18.06.1999 DE 19927937**

(43) Veröffentlichungstag der Anmeldung:
**02.05.2002 Patentblatt 2002/18**

(73) Patentinhaber: **Hambitzer, Günther, Dr.**
**76327 Pfinztal (DE)**

(72) Erfinder:
• **HAMBITZER, Günther**
  **D-76327 Pfinztal (DE)**
• **KREIDLER, Bernd**
  **D-76327 Pfinztal (DE)**
• **DÖGE, Volker**
  **D-76229 Karlsruhe (DE)**
• **DÖRFLINGER, Ulrike**
  **D-76327 Pfinztal (DE)**
• **SCHORB, Klaus**
  **D-76287 Rheinstetten (DE)**

(74) Vertreter: **Pfeifer, Hans-Peter, Dr. et al**
**Patentanwälte**
**Dr. H.-P. Pfeifer Dr. P. Jany**
**Beiertheimer Allee 19**
**76137 Karlsruhe (DE)**

(56) Entgegenhaltungen:
**EP-A- 0 615 301          WO-A-00/44061**
**DE-A- 19 908 532        US-A- 5 213 914**
**US-A- 5 656 391**

• **DREHER J ET AL: "RECHARGEABLE LICOO2 IN INORGANIC ELECTROLYTE SOLUTION" JOURNAL OF POWER SOURCES,CH,ELSEVIER SEQUOIA S.A. LAUSANNE, Bd. 44, Nr. 1/03, 15. April 1993 (1993-04-15), Seiten 583-587, XP000412947 ISSN: 0378-7753**

**Beschreibung**

Die Erfindung betrifft eine wiederaufladbare elektrochemische Zelle mit einer negativen Elektrode; die im geladenen Zustand ein aktives Metall enthält, einem auf Schwefeldioxid basierenden Elektrolyt und einer positiven Elektrode, die das aktive Metall speichert. Beim Laden der Zelle treten Ionen des aktiven Metalls aus der Elektrode in die Elektrolytlösung aus und werden auf der negativen Elektrode abgeschieden. Beim Entladen löst sich das auf der negativen Elektrode abgeschiedene aktive Metall auf. Eine entsprechende Menge an Metallionen wird in der positiven Elektrode gespeichert.

Als "auf $SO_2$ basierende Elektrolyten ($SO_2$-based electrolytes)" werden Elektrolytlösungen bezeichnet, die $SO_2$ nicht nur als Zusatz in geringer Konzentration enthalten, sondern bei denen die Beweglichkeit der Ionen des Leitsalzes, die in dem Elektrolyt den Ladungstransport bewirken, zumindest teilweise durch das $SO_2$ gewährleistet wird. Das $SO_2$ stellt also ein Lösungsmittel für das Leitsalz dar.

Besondere Bedeutung haben Zellen, bei denen das aktive Metall der negativen Elektrode ein Alkalimetall, insbesondere Lithium oder Natrium ist. In diesem Fall ist das Leitsalz vorzugsweise ein Tetrachloroaluminat des Alkalimetalls, beispielsweise $LiAlCl_4$. Im Rahmen der Erfindung bevorzugte aktive Metalle sind neben Lithium und Natrium auch Kalzium und Zink.

Wiederaufladbare elektrochemische Zellen mit auf $SO_2$ basierendem Elektrolyt haben wesentliche Vorteile, die sie für viele Anwendungszwecke, bei denen wiederaufladbare elektrische Energiequellen benötigt werden, vorteilhaft erscheinen lassen. In "the Handbook of Batteries" von David Linden, zweite Auflage, 1994, Mc Graw Hill wird auf Seite 36.25 beispielsweise festgestellt, daß Zellen mit auf $SO_2$ basierenden anorganischen Elektrolyten attraktiv sind, weil sie wegen der hohen Ionenleitfähigkeit des Elektrolyten mit hohen Lade- und Entladeströmen betrieben werden können. Als weitere Vorteile werden eine hohe Energiedichte, eine niedrige Selbstentladungsrate, die Möglichkeit einer beschränkten Überladung und Tiefentladung sowie eine hohe Zellspannung angegeben. Trotz dieser Vorteile werden sie in der genannten Literaturstelle als für den allgemeinen Gebrauch weitgehend ungeeignet angesehen, unter anderem wegen potentieller Sicherheitsrisiken.

Es lassen sich unterschiedliche Typen der genannten Zellen unterscheiden, wobei sich die Unterschiede vor allem auf die positive Elektrode beziehen.

Bei einer ersten Gruppe wird Kohlenstoff in Form eines Graphit-Materials für die positive Elektrode verwendet. Dabei ist der Entlade- und Ladevorgang mit einer Redox-Komplexbildung des Elektrolytsalzes (z.B. $LiAlCl_4$) mit dem Kohlenstoff verbunden.

Bei einer zweiten Gruppe basiert die positive Elektrode auf einem Metallhalogenid, wie beispielsweise $CuCl_2$, wobei eine einfache Elektrodenreaktion zwischen dem aktiven Metall und der Elektrode stattfindet (vgl. Handbook of Batteries, auf der angegebenen Seite).

Bei einer dritten Gruppe von Zellen, auf die sich die Erfindung in besonderem Maße richtet, besteht die positive Elektrode aus einem Metalloxid, insbesondere in Form einer Interkalationsverbindung. Eine solche Zelle mit Lithium als aktivem Metall und einer positiven Interkalationselektrode auf Basis von $LiCoO_2$ ist Gegenstand des US-Patentes 5,213,914. Verfahren zur Herstellung geeigneter Interkalationselektroden sind in den europäischen Patenten 0357952 B1 und 0673552 B1 beschrieben. Der Inhalt dieser Zitate wird durch Bezugnahme zum Gegenstand der vorliegenden Anmeldung gemacht.

Ein Problem, das den unterschiedlichen Typen der Zellen mit auf $SO_2$ basierendem Elektrolyt gemeinsam ist, besteht darin, daß beim Lagern der Zelle an der negativen Elektrode eine Selbstentladereaktion stattfindet, bei der das Schwefeldioxid der Elektrolytlösung mit dem aktiven Metall der negativen Elektrode zu einer schwer löslichen Verbindung reagiert. Im Falle eines einwertigen aktiven Metalls A bildet sich beispielsweise ein Dithionit des Metalls gemäß der Reaktionsgleichung:

$$2A + 2SO_2 \rightarrow A_2S_2O_4.$$

Das schwer lösliche Produkt dieser Selbstentladereaktion lagert sich als Deckschicht auf der negativen Elektrode ab.

Durch diese Selbstentladereaktion wird $SO_2$ verbraucht, welches somit nicht mehr als Lösungsmittel für das Leitsalz zur Verfügung steht. Andererseits ist es für die Funktion der Zelle jedoch unabdingbar, daß sie stets eine ausreichende Menge an $SO_2$ enthält. Würde der $SO_2$-Gehalt unter einen Wert sinken, der für die Beweglichkeit der Leitsalz-Ionen in dem Elektrolyt ausreicht, so würde dies zu einer nicht tolerierbaren Abnahme der elektrischen Leitfähigkeit führen. Dementsprechend enthalten übliche elektrochemische Zellen, deren Elektrolyt auf Schwefeldioxid basiert, eine große Menge an $SO_2$.

Um eine verbesserte wiederaufladbare elektrochemische Zelle zur Verfügung zu stellen, wird bei einer Zelle mit einer negativen Elektrode, die im geladenen Zustand ein aktives Metall enthält, das ausgewählt ist aus der Gruppe bestehend aus den Alkalimetallen, den Erdalkalimetallen und den Metallen der zweiten Nebengruppe des Periodensystems, einer auf Schwefeldioxid basierenden Elektrolytlösung und einer positiven Elektrode, die das aktive Metall enthält und aus der beim Ladevorgang Ionen in die Elektrolytlösung austreten, wobei an der negativen Elektrode eine Selbstentladereaktion stattfindet, bei der das Schwefeldioxid der Elektrolytlösung mit dem aktiven Metall der negativen Elektrode zu einer schwer löslichen Verbindung reagiert, vorgeschlagen, daß die elektrochemische Ladungsmenge des Schwefeldioxids, berechnet mit einem Faraday pro Mol Schwefeldioxid, in der Zelle kleiner als die elektrochemisch theoretisch in der positiven Elektrode speicherbare Ladungsmenge des aktiven Metalls ist.

Die Kapazität einer Zelle der hier in Rede stehenden Art wird durch die in der positiven Elektrode speicherbare Menge des aktiven Metalls bestimmt. Das aktive Metall ist im entladenen Zustand der Zelle in maximaler Konzentration in der positiven Elektrode enthalten und tritt beim Ladevorgang in die Elektrolytlösung aus. Eine entsprechende Menge des aktiven Metalls lagert sich auf der negativen Elektrode ab bzw. in diese ein.

Beispielsweise bei den oben erwähnten Zellen mit einer positiven Elektrode aus einem Metallhalogenid ist der Speichervorgang eine chemische Reaktion. Im Falle einer Metalloxid-Interkalationsverbindung wird das aktive Metall in der positiven Elektrode dadurch gespeichert, daß dessen Ionen in das Wirtsgitter des Metalloxids eingelagert bzw. aus diesem ausgelagert werden.

Als theoretisch in der positiven Elektrode speicherbare Ladungsmenge des aktiven Metalls wird in jedem dieser Fälle die elektrische Ladungsmenge bezeichnet, die der maximalen Menge des aktiven Metalls entspricht, die die positive Elektrode auf Basis stöchiometrischer Überlegungen rechnerisch enthalten kann. Dieser Wert der speicherbaren Ladungsmenge ist stets höher als die praktisch erreichbare maximale Kapazität der Zelle, weil aus praktischen Gründen bei keinem bisher bekannten Typ der positiven Elektrode die theoretisch speicherbare Menge vollständig in die Elektrode eingelagert und beim Laden dieser entnommen werden kann.

Die Bildung des schwerlöslichen Selbstentladeproduktes auf der negativen Elektrode verbraucht aktives Metall. Für den bevorzugten Fall, daß das aktive Metall Lithium ist, lautet die Selbstentladereaktion beispielsweise

$$2\,Li + 2SO_2 \rightarrow Li_2S_2O_4.$$

Oft werden die Zellen über lange Zeit (mehrere Monate oder sogar Jahre) gelagert. Dabei schreitet die Selbstentladereaktion ständig fort, wobei das aktive Metall aus der negativen Elektrode mit dem Schwefeldioxid zu dem schwerlöslichen Produkt (im Beispielsfall Lithiumdithionit) reagiert. Die dabei verbrauchte Menge an $SO_2$ ist äquimolar zu der an der negativen Elektrode umgesetzten Menge des aktiven Metalls. Bei voller Ladung der Zelle entspricht die maximale Menge des aktiven Metalls auf der negativen Elektrode der in der positiven Elektrode speicherbaren Ladungsmenge. Wenn die molare Menge des Schwefeldioxids in der Zelle gemäß der Lehre der vorliegenden Erfindung kleiner als die elektrochemisch äquivalente theoretisch in der positiven Elektrode speicherbare Ladungsmenge des aktiven Metalls ist, bedeutet dies, daß im Zuge der Selbstentladereaktion nach und nach das gesamte $SO_2$ des Elektrolyten verbraucht würde. Dies würde dazu führen, daß der Elektrolyt fest und somit unbrauchbar würde. Eine dauerhafte Zerstörung der Zelle wäre die Folge. Um dieses Risiko zu vermeiden, wurden bisher in Zellen der hier in Rede stehenden Art stets Mengen an Schwefeldioxid eingesetzt, die größer als die elektrochemisch äquivalente theoretisch in der positiven Elektrode speicherbare Ladungsmenge des aktiven Metalls waren.

Im Rahmen der Erfindung wurde überraschenderweise festgestellt, daß entgegen diesen für den Fachmann geläufigen Überlegungen mit einer verminderten Menge an Schwefeldioxid gearbeitet werden kann. Diese Tatsache wird nachfolgend als "$SO_2$-Paradoxon" bezeichnet. Da das Schwefeldioxid einen großen Anteil am Gesamtgewicht der Zelle hat, läßt sich durch den verminderten $SO_2$-Gehalt eine bedeutende Erhöhung der spezifischen Kapazität (Kapazität pro Gewichtseinheit) der Zelle erreichen.

Bevorzugt beträgt die elektrochemische Ladungsmenge des Schwefeldioxids weniger als 80 % der elektrochemisch theoretisch in der positiven Elektrode speicherbaren Ladungsmenge des aktiven Metalls, wobei Werte von weniger als 60 % besonders bevorzugt sind. Je niedriger der $SO_2$-Gehalt ist, desto leichter ist die Zelle bei gegebener Kapazität. Sogar mit einer Ladungsmenge, die weniger als 40 % und besonders bevorzugt weniger als 20 % der theoretisch speicherbaren Ladungsmenge entspricht, können erfindungsgemäße Zellen hergestellt werden.

Das $SO_2$-Paradoxon läßt sich nach dem gegenwärtigen Kenntnisstand der Erfinder dadurch erklären, daß an der positiven Elektrode durch eine weitere Selbstentladereaktion ein Reaktionsprodukt (beispielsweise $SO_2Cl_2$) entsteht, das zu der negativen Elektrode diffundiert und mit dem dort gebildeten schwerlöslichen Selbstentladeprodukt (beispielsweise $Li_2S_2O_4$) unter Bildung von $SO_2$ weiterreagiert. Diese Reaktion, bei der durch eine Selbstentladereaktion an der positiven Elektrode die schwerlöslichen Produkte der an der negativen Elektrode stattfindenden Selbstentladereaktion unter Bildung von $SO_2$ wieder aufgelöst werden, wird nachfolgend als "($SO_2$-bildende) Auflösungsreaktion" bezeichnet.

Überraschenderweise findet diese Reaktion unter Berücksichtigung der geringen Lösungsgeschwindigkeit des typischerweise sehr schwer löslichen die Deckschicht der negativen Elektrode bildenden Selbstentladeproduktes so rasch statt, daß die $SO_2$-bildende Auflösungsreaktion der Bildung der Selbstentladeprodukte auf der negativen Elektrode ("Bildungsreaktion") die Waage hält. Mit anderen Worten löst sich die schwerlösliche Deckschicht auf der negativen Elektrode infolge der an der positiven Elektrode stattfindenden Selbstentladereaktion ebenso schnell auf, wie sie durch die Selbstentladereaktion an der negativen Elektrode gebildet wird.

Um diesen Effekt zu fördern, sollten geeignete konstruktive Bedingungen gewählt werden. Insbesondere ist es vorteilhaft, wenn die Diffusionsstrecke zwischen der negativen Elektrode und der positiven Elektrode möglichst klein ist. Der damit verbundene große Konzentrationsgradient erhöht die Umsetzungsrate.

Daneben ist es vorteilhaft, wenn die nachfolgend erläuterten bevorzugten Ausführungsformen der Erfindung einzeln oder in Kombination miteinander verwendet werden.

Um die Auflösungsreaktion zu fördern, sollte die positive Elektrode elektronenleitende Eigenschaften haben, also ein elektronenleitendes Material enthalten. Damit ist jedes Material gemeint, dessen elektrische Leitung nicht auf der Bewegung von Ionen basiert, also insbesondere metallische Leiter und Halbleiter.

Wie bereits erwähnt ist die Erfindung von besonderer Bedeutung für Zellen, bei denen die positive Elektrode ein Metalloxid, insbesondere eine Verbindung, die ein Übergangsmetall M der Ordnungszahl 22 bis 28 und Sauerstoff enthält. Besonders bevorzugt ist eine Interkalationsverbindung aus einem Alkalimetall (als aktives Metall A der Zelle), einem Übergangsmetall M und Sauerstoff. Das Alkalimetall ist bevorzugt Lithium. Unter den genannten Metallen M sind Kobalt, Nickel und Eisen besonders bevorzugt. Praktische Bedeutung haben insbesondere auch binäre und ternäre metalloxidische Interkalationsverbindungen, die zwei oder drei unterschiedliche Übergangsmetalle in der Gitterstruktur enthalten, wie beispielsweise Lithium-Nickel-Kobalt-Oxid (vgl. US-Patent 4,567,031). Soweit hier von "einem" Übergangsmetall als Bestandteil der Interkalationsverbindung gesprochen wird, bedeutet dies selbstverständlich nicht, daß die Verbindung nur ein einziges Übergangsmetall enthält.

Für den besonders bevorzugten Anwendungsfall wurde die Auflösungsreaktion näher untersucht. Nach dem gegenwärtigen Kenntnisstand der Erfinder läßt sich für die (aus mehreren Teilreaktionen bestehende) $SO_2$-bildende Auflösungsreaktion bei Verwendung einer positiven Elektrode, die $CoO_2$ enthält, folgende Summenformel angeben:

$$2CoO_2 + Li_2S_2O_4 \rightarrow 2SO_2 + 2LiCoO_2$$

Die erfindungsgemäße wiederaufladbare Zelle zeichnet sich neben der bereits erwähnten hohen spezifischen Kapazität auch durch ein hohes Maß an Betriebssicherheit aus. Dies bezieht sich insbesondere auf die einleitend angesprochenen Risiken, die damit zusammenhängen, daß im Falle eines Temperaturanstiegs im Zellinnenraum in verstärktem Umfang exotherme Reaktionen stattfinden, die ihrerseits zu einem weiteren Anstieg der Temperatur führen. Dieser selbstverstärkende Effekt wird in der Fachwelt als "thermal runaway" bezeichnet.

In der Praxis können solche Sicherheitsprobleme nicht nur bei mechanischer Beschädigung der Batterie, sondern unter Umständen auch im Normalbetrieb auftreten. Ein besonderes Problem stellt diesbezüglich die Bildung von Dendriten beim Laden an der Elektrode dar, die den Separator der Batterie durchstoßen und einen Kurzschluß zur benachbarten Gegenelektrode bewirken können. Interne Kurzschlüsse können auch durch im Laufe der Lebensdauer der Zellen gebildete elektrochemisch inaktive Bestandteile verursacht werden, die Ablagerungen (beispielsweise sogenanntes "totes Lithium") auf der negativen Elektrode bilden. Obwohl diese Ablagerungen elektrochemisch inaktiv sind, sind sie chemisch hoch reaktiv und fördern beim Laden den Durchbruch des Separators und damit einen Kurzschluß in der Zelle.

Obwohl Batteriehersteller bereits seit längerem versuchen, durch elektronische, mechanische oder chemische Mechanismen den Lade- bzw. Entladestromkreis so zu kontrollieren, daß der Stromfluß unterhalb einer kritischen Temperatur unterbrochen wird, ist der Sicherheitsstandard bei den vorbekannten Zellen nicht befriedigend.

Im Rahmen der Erfindung wurde festgestellt, daß der verminderte $SO_2$-Gehalt zu einer wesentlichen Verbesserung der Betriebssicherheit führt. Dies läßt sich damit erklären, daß bei erhöhten Temperaturen aus dem $SO_2$ Gase gebildet werden, die zu einem Druckanstieg in der Zelle führen und dieses Sicherheitsrisiko durch den erfindungsgemäß reduzierten $SO_2$-Gehalt wesentlich vermindert wird.

Eine weitere verbesserung der Betriebssicherheit läßt sich kostengünstig dadurch erreichen, daß mindestens im Bereich der negativen Elektrode zusätzlich zu dem Leitsalz des Elektrolyten ein weiteres Salz in der Zelle enthalten ist. Das weitere Salz kann im gelösten Zustand vorliegen, bevorzugt handelt es sich jedoch um ein in dem Elektrolyt schwer lösliches Salz in einer Konzentration oberhalb seiner Löslichkeit, das im festen Zustand im Bereich der negativen Elektrode angeordnet ist. Es wird zweckmäßigerweise in die Zelle eingebracht, bevor diese mit der Elektrolytflüssigkeit, die das Leitsalz enthält, gefüllt wird.

Um seine positive Wirkung zu entfalten, muß das vorzugsweise feste weitere Salz in dem Sinne "im Bereich" der negativen Elektrode angeordnet sein, daß es auf die in sicherheitskritischen Situationen in der unmittelbaren Umgebung der Elektrodenoberfläche ablaufenden exothermen Reaktionen einwirkt. Bevorzugt ist das Salz ein Alkalihalogenid, insbesondere LiF, NaCl oder LiCl. Ein unmittelbarer Kontakt zwischen der Elektrode und dem Salz ist nicht unbedingt erforderlich, jedoch ist es in der Regel bevorzugt, wenn zumindest bei einem Teil des Lade- und Entladezyklus der Zelle ein Kontakt zu der negativen Elektrode, speziell zu einer an der Elektrode gebildeten aktiven Masse, besteht.

Vorzugsweise hat das weitere Salz eine poröse Struktur. Es kann insbesondere als körnige Schüttung oder als Verbund von Salzpartikeln, die miteinander (beispielsweise durch Zusammensintern) verbunden sind, ausgebildet sein. Unter Umständen kann die poröse Struktur des Salzes auch dadurch gebildet sein, daß ein poröser Tragkörper derartig mit Salz beschichtet ist, daß seine Poren nicht vollständig geschlossen sind. Der Tragkörper sollte aus einem chemisch inerten formstabilen Material, beispielsweise Glas oder Oxidkeramik bestehen.

Die poröse Struktur sollte (insbesondere hinsichtlich der Porengröße) so ausgebildet und angeordnet sein, daß die beim Laden der Zelle an der negativen Elektrode zunehmende aktive Masse in die Poren der porösen Salzstruktur eindringt. Dadurch wird erreicht, daß das Salz in großflächigem Kontakt zu denjenigen Substanzen steht, die zu sicherheitskritischen Zuständen führen können bzw. die im Falle eines "thermal runaway" Wärme abgeben.

Nähere Einzelheiten über die Wirksamkeit eines Salzzusatzes im Bereich der Elektroden nichtwässriger elektrochemischer Zellen sind der internationalen Patentanmeldung PCT/DE 00/00177 zu entnehmen. Auf die dort gegebenen Erläuterungen wird sowohl hinsichtlich bevorzugter Ausgestaltungen als auch hinsichtlich der erzielten Wirkung in vollem Umfang Bezug genommen. Wie darin näher erläutert wird, basiert die Wirkung des Salzzusatzes einerseits auf physicochemischen Effekten (Verlangsamung des Zutritts von Reaktionsbestandteilen und der Ausbreitung einer lokalen Erhitzung; Wärmeabfuhr durch die zum Schmelzen eines festen Salzes erforderliche Schmelzwärme) und andererseits auf chemischen Reaktionen.

Das weitere Salz ist vorzugsweise ein Halogenid, wobei Alkalihalogenide besonders bevorzugt sind. Insbesondere haben sich LiF, NaCl und LiCl bewährt.

Im Rahmen der vorliegenden Erfindung wurde festgestellt, daß der Zusatz eines weiteren Salzes zusätzlich zu dem Leitsalz nicht nur die erläuterten Vorteile hinsichtlich der Sicherheit hat, sondern darüber hinaus zu einer wesentlichen Verbesserung der Funktion erfindungsgemäßer elektrochemischer Zellen führt.

Dies läßt sich am Beispiel der Zelle Li|LiAlCl$_4$|LiCoO$_2$ nach dem gegenwärtigen Kenntnisstand der Erfinder wie folgt erklären:

a) In dem Elektrolyt findet an der positiven Elektrode (sowohl bei der Selbstentladung als auch beim Überladen der Zelle) folgende Reaktionsfolge statt, bei der aus den Tetrachloroaluminat-Ionen Sulfurylchlorid gebildet wird:

$$2(AlCl_4)^- \rightarrow 2\,AlCl_3 + Cl_2 + 2\,e^-;$$

$$Cl_2 + SO_2 \rightarrow SO_2Cl_2$$

b) Das gebildete Sulfurylchlorid reagiert mit der Deckschicht auf der negativen Elektrode gemäß:

$$Li_2S_2O_4 + SO_2Cl_2 \rightarrow 2\,LiCl + 3\,SO_2$$

c) Neben dieser für die Funktion der Zelle vorteilhaften Reaktionsfolge finden folgende weitere Reaktionen statt:

$$3\,Li + AlCl_3 \rightarrow Al + 3\,LiCl$$

$$6\,Al + 3\,SO_2 \rightarrow Al_2S_3 + 2\,Al_2O_3$$

Da diese Reaktionsfolge irreversibel ist und SO$_2$ verbraucht, beeinträchtigt sie die Funktion der Zelle.

d) Die Gegenwart des zusätzlichen Salzes im Bereich der negativen Elektrode führt dazu, daß das gemäß a) gebildete an der Reaktionsfolge c) beteiligte AlCl$_3$ deaktiviert wird. Gemäß dem derzeitigen Kenntnisstand dürfte dies auf Reaktionen des folgenden Typs zurückzuführen sein:

$$LiF + AlCl_3 \rightarrow LiAlFCl_3$$

$$LiCl + AlCl_3 \rightarrow LiAlCl_4$$

Diese beispielhaften Erläuterungen lassen sich dahingehend zusammenfassen, daß der Zusatz eines weiteren Salzes Korrosivstoffe bindet und damit deaktiviert, die ohne den Salzzusatz Reaktionen verursachen, bei denen SO$_2$ irreversibel verbraucht wird. Mit anderen Worten verhindert der Salzzusatz Reaktionen, die mit der "SO$_2$-bildenden Auflösungsreaktion" konkurrieren und SO$_2$ irreversibel verbrauchen würden.

Im Rahmen der Erfindung wurde festgestellt, daß das bei der Reaktion a) gebildete AlCl$_3$ die Funktion der Zelle auch dadurch beeinträchtigt, daß Moleküle des Li$_2$S$_2$O$_4$ aus der Deckschicht der negativen Elektrode herausgelöst werden. Mit anderen Worten schleppt ds AlCl$_3$ Li$_2$S$_2$O$_4$ aus der Deckschicht weg. Dadurch wird das darunterliegende (durch der Deckschicht passivierte) Alkalimetall reaktionsfähig, und es wird - unter Verbrauch von SO$_2$ - neues Li$_2$S$_2$O$_4$ gebildet. Auch dieser störende Effekt des AlCl$_3$ wird durch den Zusatz eines weiteren Salzes stark reduziert und dadurch die Funktion der Zelle wesentlich verbessert.

Alternativ oder zusätzlich zu dem weiteren Salz enthält die erfindungsgemäße Zelle gemäß einer weiteren bevorzugten Ausgestaltung eine ein Halogen enthaltende Verbindung, insbesondere Aluminiumfluorid (AlF$_3$) oder Borfluorid (BF$_3$). Auch für diesen bevor-

zugten Zusatzstoff gelten die vorherigen Erläuterungen hinsichtlich der Lokalisierung (mindestens im Bereich der negativen Elektrode), des Aggregatzustandes (bevorzugt fest) und hinsichtlich der körnigen Struktur. Nach dem gegenwärtigen Kenntnisstand der Erfinder ist die positive Wirkung solcher Zusätze darauf zurückzuführen, daß das in solchen Verbindungen gebundene Halogen eine ähnlich Wirksamkeit wie die Halogenidionen eines entsprechendes Salzes hat.

Die negative Elektrode weist bevorzugt ein metallisches Substrat auf, beispielsweise aus einem Streckmetall (precision-expanded foil) aus Nickel oder Kobalt. Besonders bevorzugt besteht das metallische Substrat aus einem Metallschaum (metal foam), d.h. einem hochporösen, schaumförmigen metallischen Material. Kommerzielle Produkte, die sich hierfür bewährt haben, haben eine Porosität von ca. 90 % bis 95 %. Auf diesem schaumförmigen Substrat kann unmittelbar eine Separatorschicht aufgebracht werden, wobei dies gemäß einer bevorzugten Ausführungsform dadurch geschieht, daß man (beispielsweise in Form einer pastösen Masse) ein keramisches Oxidmaterial (insbesondere Aluminiumoxid) als dünne Schicht aufträgt und dann unter Schutzgasatmosphäre oder im Vakuum glüht.

Es können auch andere bekannte Typen negativer Elektroden eingesetzt werden, insbesondere eine Legierung des aktiven Metalls, in die das aktive Metall beim Ladevorgang aufgenommen wird. Weitere bekannte Möglichkeiten bestehen darin, daß die negative Elektrode ein Wirtsgitter, beispielsweise auf Basis von Kohlenstoff, aufweist, in das das aktive Metall beim Laden und Entladen der Zelle eingelagert bzw. ausgelagert wird.

### Beisipiel 1

Es wurde eine elektrochemische Zelle mit folgenden Merkmalen hergestellt:

- Positive Elektrode: Interkalationselektrode aus 4 g $LiCoO_2$. Die theoretisch in dieser Elektrode speicherbare Ladungsmenge beträgt etwa 1,1 Ah.

- Negative Elektrode: Tragplatte aus Nickelschaum (Hersteller RETEC, USA), auf die zur Herstellung eines Separators Aluminiumoxid (in wäßriger Paste) aufgebracht und unter Inertgas bei 1.050 °C geglüht wurde.

- Elektrolyt: 3,3 g $LiAlCl_4$ in 2,4 g $SO_2$. Berechnet mit 1 Faraday pro Mol entspricht die Menge des $SO_2$ einer Ladungsmenge von 1 Ah.

Die Zelle wurde bis 4,3 V mit 0,6 Ah aufgeladen. Dies entspricht 60 % der theoretischen Kapazität. Danach wurde sie acht Monate gelagert. Während der Lagerung wurde mehrfach die Leitfähigkeit des Elektrolyten mittels elektrochemischer Impedanzspektroskopie kontrolliert. Nach der Lagerung wurde die Restkapazität und die **gene**relle Funktionsfähigkeit der Zelle geprüft.

Obwohl nach acht Monaten nur noch 20 % der ursprünglichen Ladekapazität zur Verfügung standen, das aktive Metall also durch Selbstentladungsreaktion zu 80 % verbraucht war, hatte die elektrolytische Leitfähigkeit nach der Lagerung nur wenig (um ca 20%) abgenommen. Nach erneutem Ladevorgang bis 4,3 V war keine wesentliche Verringerung der Zellkapazität festzustellen.

### Beispiel 2

Eine zweite Zelle wurde ähnlich der Zelle gemäß Beispiel 1 aufgebaut mit folgenden Änderungen:

- Die positive Elektrode bestand aus 6,7 g $LiNiO_2$. Die theoretisch in dieser Elektrode speicherbare Ladungsmenge beträgt etwa 1,84 Ah.

- Der Elektrolyt bestand aus 3 g $LiAlCl_4$ und 2 g $SO_2$. Berechnet mit 1 Faraday pro Mol entspricht die Menge des $SO_2$ einer Ladungsmenge von 0,84 Ah.

Die Zelle wurde mehrfach zyklisch zwischen 3,0 und 4,3 V geladen und entladen, wobei sie jeweils auf 1,0 Ah (entsprechend 55 % der theoretischen Kapazität) aufgeladen wurde. Nach zwanzig Zyklen wurde sie sechs Monate bei 20 °C gelagert. Die Kontrolle der Leitfähigkeit ergab wiederum keine wesentlichen Änderungen während der Lagerungszeit. Nach sechs Monaten betrug die Restkapazität 0,3 Ah. Bei einem nachfolgenden Lade- und Entladezyklus wurde keine wesentliche Verschlechterung der Nennkapazität und des Innenwiderstandes der Zelle festgestellt. Auch mit dem sehr geringen $SO_2$-Gehalt dieses Beispiels resultiert eine unverändert gute Funktion der Zelle, wobei gleichzeitig die mit dem verminderten $SO_2$-Gehalt verbundenen Vorteile erreicht werden.

### Beispiel 3

Eine weitere Zelle wurde gemäß Beispiel 1 aufgebaut mit folgenden Änderungen:

- Negative Elektrode: Tragplatte aus Nickel-Streckmetall.

- Salzzusatz: LiF-Pulver mit einem mittleren Partikeldurchmesser von 220 μm wurde unter Verwendung von organischem Bindemittel auf das Nickel-Streckmetall der negativen Elektrode aufpastiert.

Die Zelle wurde wie bei Beispiel 1 geladen und acht Monate gelagert. Die Leitfähigkeit der Elektrolytlösung blieb während der Lagerzeit konstant.

Nach acht Monaten ließen sich noch 40% der ursprünglichen Kapazität der Zelle entnehmen. Nach erneutem Laden und Überladen bei 4,3 V war keine Verringerung der Zellkapazität festzustellen. Während bei der Zelle gemäß Beispiel 1 bei einer größeren Anzahl von Lade- und Entladezyklen eine schleichende, wenn auch geringe, Erhöhung des Elektrolytwiderstandes festgestellt wurde, blieb der Elektrolytwiderstand bei der Zelle dieses Beispiels auch nach 100 Zyklen konstant.

Der Vergleich mit Beispiel 1 zeigt eine deutliche Verbesserung hinsichtlich der irreversiblen Änderung der Elektrolyt-Leitfähigkeit. Diese Wirkung des Salzzusatzes wird noch wesentlich deutlicher bei erhöhter Temperatur. Eine Wiederholung der Beispiele 1 und 3 mit auf 50°C erhöhter Lagerungstemperatur führt zu dem Ergebnis, daß bei einer Zelle entsprechend Beispiel 1 (ohne Salzzusatz) nach einer Lagerung für acht Monate und nachfolgendem Aufladen die Elektrolyt-Leitfähigkeit um 35 % abgenommen hatte, während bei einer Zelle gemäß Beispiel 3 unter sonst gleichen Bedingungen die Elektrolyt-Leitfähigkeit nach der Lagerung unverändert war.

Beispiel 4

Es wurde eine elektrochemische Zelle mit folgenden Merkmalen hergestellt:

- Positive Elektrode: 7 g $LiCoO_2$ (Merck SC10) wurde in eine Nickelschaummatrix (Firma RETEC, Typ 2625-200T) mit 200 mg Keramikbinder (COTRONICS, Typ 792) gepreßt und bei 480°C getempert. Theoretisch in der Zelle speicherbare Ladungsmenge: 1,9 Ah.

- Negative Elektrode: Nickel-Streckmetall (Firma Delker).

- Elektrolyt: 3,3 g $LiAlCl_4$ gelöst in 2,4 g $SO_2$. Berechnet mit 1 Faraday pro Mol entspricht die Menge des $SO_2$ einer Ladungsmenge von 1 Ah.

- Salzzusatz: Schüttung aus 1,5 g LiF-Pulver mit einem mittleren Partikeldurchmesser von etwa 220 μm zwischen negativer Elektrode und Separator.

Die Zelle wurde mehrmals zwischen 3,5 und 4,4 V galvanostatisch zyklisiert und anschließend bis 4,3 V mit 1 Ah aufgeladen. Anschließend wurde sie 80 Tage bei Raumtemperatur gelagert. Beim anschließenden Entladen standen noch 0,6 Ah an Entladekapazität zur Verfügung.

Die Zelle ließ sich in Folgezyklen mit den im ersten Zyklus beobachteten Lade-Entladekapazitäten (bei gleichen Lade/Entladeströmen) zyklisieren und blieb über 200 Zyklen voll funktionsfähig.

**Patentansprüche**

1. Wiederaufladbare elektrochemische Zelle mit einer negativen Elektrode, die im geladenen Zustand ein aktives Metall enthält, das ausgewählt ist aus der Gruppe bestehend aus den Alkalimetallen, den Erdalkalimetallen und den Metallen der zweiten Nebengruppe des Periodensystems, einer auf Schwefeldioxid basierenden Elektrolytlösung und einer positiven Elektrode, die das aktive Metall enthält und aus der beim Ladevorgang Ionen in die Elektrolytlösung austreten, wobei an der negativen Elektrode eine Selbstentladereaktion stattfindet, bei der das Schwefeldioxid der Elektrolytlösung mit dem aktiven Metall der negativen Elektrode zu einer schwer löslichen Verbindung reagiert, **dadurch gekennzeichnet, daß** die elektrochemische Ladungsmenge des in der Zelle enthaltenen Schwefeldioxids, berechnet mit einem Faraday pro Mol Schwefeldioxid, kleiner als die elektrochemisch theoretisch in der positiven Elektrode speicherbare Ladungsmenge des aktiven Metalls ist.

2. Zelle nach Anspruch 1, **dadurch gekennzeichnet, daß** die elektrochemische Ladungsmenge des Schwefeldioxids kleiner als 80 %, bevorzugt kleiner als 60 %, besonders bevorzugt kleiner als 40 %, noch weiter bevorzugt kleiner als 20 % der elektrochemisch theoretisch in der positiven Elektrode speicherbaren Ladungsmenge des aktiven Metalls ist.

3. Zelle nach einem der Ansprüche 1 oder 2, **dadurch gekennzeichnet, daß** sie mindestens im Bereich der negativen Elektrode zusätzlich zu dem Leitsalz des Elektrolyten ein weiteres Salz enthält.

4. Zelle nach Anspruch 3, **dadurch gekennzeichnet, daß** das weitere Salz ein Halogenid, insbesondere ein Alkalihalogenid, insbesondere LiF, NaCl oder LiCl, ist.

5. Zelle nach Anspruch 4, **dadurch gekennzeichnet, daß** das weitere Salz eine Mischung aus LiCl und mindestens einem anderen Alkalihalogenid, insbesondere LiF ist.

6. Zelle nach einem der vorhergehenden Ansprüche, **dadurch gekennzeichnet, daß** sie mindestens im Bereich der negativen Elektrode eine ein Halogen enthaltende Verbindung enthält.

7. Zelle nach einem der Ansprüche 3 bis 6, **dadurch gekennzeichnet, daß** das weitere Salz und/oder die ein Halogen enthaltende Verbindung im festen Zustand in einer porösen Struktur, insbesondere als körnige Schüttung oder als Verbund von Partikeln, vorliegt.

8. Zelle nach Anspruch 7, **dadurch gekennzeichnet, daß** die poröse Struktur so ausgebildet und angeordnet ist, daß sie zumindest während eines Teils des Ladeund Entladezyklus in Kontakt zu einer an der negativen Elektrode gebildeten aktiven Masse steht.

9. Zelle nach einem der vorhergehenden Ansprüche, **dadurch gekennzeichnet, daß** die negative Elektrode ein metallisches Substrat aufweist, auf dem beim Laden der Zelle das aktive Metall abgeschieden wird.

10. Zelle nach einem der Ansprüche 1 bis 8, **dadurch gekennzeichnet, daß** die negative Elektrode eine Legierung des aktiven Metalls oder ein Wirtsgitter für das aktive Metall enthält und das aktive Metall beim Laden der Zelle in die Legierung bzw. in das Wirtsgitter aufgenommen wird.

11. Zelle nach einem der vorhergehenden Ansprüche, **dadurch gekennzeichnet, daß** die positive Elektrode ein elektronenleitendes Material enthält.

12. Zelle nach einem der vorhergehenden Ansprüche, **dadurch gekennzeichnet, daß** die positive Elektrode ein Metalloxid enthält.

13. Zelle nach einem der vorhergehenden Ansprüche, **dadurch gekennzeichnet, daß** die positive Elektrode eine Interkalationsverbindung enthält.

14. Zelle nach einem der vorhergehenden Ansprüche, **dadurch gekennzeichnet, daß** das aktive Metall Lithium, Natrium, Kalzium oder Zink ist.

## Claims

1. Rechargeable electrochemical cell, comprising a negative electrode, which in the charged state contains an active metal selected from the group consisting of the alkaline metals, the alkaline-earth metals and the metals of the second subgroup of the periodic system; an electrolyte solution based on sulfur dioxide; and a positive electrode which contains the active metal and from where ions are released into the electrolyte solution during the charging process, wherein a self discharge reaction takes place at the negative electrode, by which the sulfur dioxide of the electrolyte solution reacts with the active metal of the negative electrode to form a poorly soluble compound,

**characterized in that** the quantity of the electrochemical charge of the sulfur dioxide in the cell, calculated with one faraday per mole sulfur dioxide, is smaller than the quantity of the charge of the active metal which can be theoretically electrochemically accumulated in the positive electrode.

2. Cell according to claim 1, **characterized in that** the quantity of the electrochemical charge of the sulfur dioxide is less than 80 %, preferably less than 60 %, particularly preferred less than 40 %, and, even more preferably, less than 20 % of the quantity of the charge of the active metal that can be theoretically electrochemically accumulated in the positive electrode.

3. Cell according to any one of claims 1 or 2, **characterized in that** it contains, at least in the range of the negative electrode, a further salt in addition to the conducting salt of the electrolyte.

4. Cell according to claim 3, **characterized in that** the further salt is a halide, in particular an alkaline halide, in particular LiF, NaCl or LiCl.

5. Cell according to claim 4, **characterized in that** the further salt is a mixture of LiCl and at least one other alkaline halide, in particular LiF.

6. Cell according to any one of the preceding claims, **characterized in that** it contains, at least in the range of the negative electrode, a compound containing a halogen.

7. Cell according to any one of claims 3 to 6, **characterized in that** the further salt and/or the compound containing a halogen is present in solid state in a porous structure, in particular as a granular filling or as a body of bonded particles.

8. Cell according to claim 7, **characterized in that** the porous structure is adapted and arranged to be in contact, at least during a part of the charge/discharge cycle, to an active mass formed at the negative electrode.

9. Cell according to any one of the preceding claims, **characterized in that** the negative electrode comprises a metallic substrate onto which the active metal is deposited during the charging of the cell.

10. Cell according to any one of claims 1 to 8, **characterized in that** the negative electrode comprises an alloy of the active metal, or a matrix lattice for the active metal, with the active metal being absorbed into the alloy or into the matrix lattice, respectively, during the charging of the cell.

**11.** Cell according to any one of the preceding claims, **characterized in that** the positive electrode comprises an electron-conducting material.

**12.** Cell according to any one of the preceding claims, **characterized in that** the positive electrode comprises a metal oxide.

**13.** Cell according to any one of the preceding claims, **characterized in that** the positive electrode comprises an intercalation compound.

**14.** Cell according to any one of the preceding claims, **characterized in that** the active metal is lithium, sodium, calcium or zinc.

**Revendications**

**1.** Cellule électrochimique rechargeable comprenant une électrode négative qui contient à l'état chargé un métal actif, sélectionné dans le groupe composé des métaux alcalins, des métaux alcalino-terreux et des métaux du second sous-groupe du système périodique et
une solution électrolytique à base d'anhydride sulfureux,
une électrode positive qui contient le métal actif et d'où des ions sortent dans la solution électrolytique lors de la charge,
une réaction de décharge spontanée ayant lieu sur l'électrode négative, dans laquelle l'anhydride sulfureux de la solution électrolytique réagit avec le métal actif de l'électrode négative en un composé difficilement soluble,
**caractérisée en ce que**
la quantité de charge électrochimique de l'anhydride sulfureux contenu dans la cellule, calculée avec un faraday par mole d'anhydride sulfureux, est plus faible que la quantité de charge électrochimique du métal actif théoriquement accumulable dans l'électrode positive.

**2.** Cellule suivant la revendication 1, **caractérisée en ce que** la quantité de charge électrochimique de l'anhydride sulfureux est inférieure à 80 %, de préférence à inférieure 60 %, de façon particulièrement préférentielle inférieure à 40 %, encore plus préférentiellement inférieure à 20 %, de la quantité de charge électrochimique du métal actif théoriquement accumulable dans l'électrode positive.

**3.** Cellule suivant l'une des revendications 1 et 2, **caractérisée en ce qu'**elle contient un autre sel en supplément du sel conducteur de l'électrolyte au moins dans la zone de l'électrode négative.

**4.** Cellule suivant la revendication 3, **caractérisée en ce que** l'autre sel est un halogénure, en particulier un halogénure alcalin, en particulier LiF, NaCl ou LiCl.

**5.** Cellule suivant la revendication 4, **caractérisée en ce que** l'autre sel est un mélange de LiCl et au moins d'un autre halogénure alcalin, en particulier LiF.

**6.** Cellule suivant l'une des revendications précédentes, **caractérisée en ce qu'**elle contient un composé contenant un halogène au moins dans la zone de l'électrode négative.

**7.** Cellule suivant l'une des revendications 3 à 6, **caractérisée en ce que** l'autre sel et/ou le composé contenant un halogène est présent à l'état solide dans une structure poreuse, en particulier sous forme d'entassement granuleux ou d'amas de particules.

**8.** Cellule suivant la revendication 7, **caractérisée en ce que** la structure poreuse est configurée et disposée de telle sorte qu'elle est au contact d'une masse active formée sur l'électrode négative au moins pendant une partie du cycle de charge et de décharge.

**9.** Cellule suivant l'une des revendications précédentes, **caractérisée en ce que** l'électrode négative présente un substrat métallique, sur lequel le métal actif se dépose lors de la charge de la cellule.

**10.** Cellule suivant l'une des revendications 1 à 8, **caractérisée en ce que** l'électrode négative contient un alliage du métal actif ou un réseau hôte pour le métal actif et le métal actif est reçu dans l'alliage et/ou le réseau hôte lors de la charge de la cellule.

**11.** Cellule suivant l'une des revendications précédentes, **caractérisée en ce que** l'électrode positive contient un matériau électroniquement conducteur.

**12.** Cellule suivant l'une des revendications précédentes, **caractérisée en ce que** l'électrode positive contient un oxyde métallique.

**13.** Cellule suivant l'une des revendications précédentes, **caractérisée en ce que** l'électrode positive contient un composé d'intercalation.

**14.** Cellule suivant l'une des revendications précédentes, **caractérisée en ce que** le métal actif est du lithium, du sodium, du calcium ou du zinc.